Europäisches Patentamt

European Patent Office

Office européen des brevets

(11) Veröffentlichungsnummer: **0 289 518**
**B1**

# EUROPÄISCHE PATENTSCHRIFT

(45) Veröffentlichungstag der Patentschrift:
31.01.90

(51) Int. Cl.⁴: **B 62 D 5/04,** G 01 L 1/04,
G 01 L 5/00

(21) Anmeldenummer: 87901361.3

(22) Anmeldetag: 27.02.87

(86) Internationale Anmeldenummer:
PCT/DE 87/00076

(87) Internationale Veröffentlichungsnummer:
WO 87/05573 (24.09.87 Gazette 87/21)

(54) MESSEINRICHTUNG ZUR ERFASSUNG DES DIFFERENZDREHWINKELS ODER DIFFERENZDREHMOMENTS EINES AUF TORSION BEANSPRUCHTEN MASCHINENTEILS.

(30) Priorität: 14.03.86 DE 3608521

(43) Veröffentlichungstag der Anmeldung:
09.11.88 Patentblatt 88/45

(45) Bekanntmachung des Hinweises auf die Patenterteilung:
31.01.90 Patentblatt 90/5

(84) Benannte Vertragsstaaten:
DE FR GB IT

(56) Entgegenhaltungen:
EP-A- 174 202
FR-A- 2 319 522
US-A- 2 930 247

(73) Patentinhaber: ROBERT BOSCH GMBH, Postfach 50,
D-7000 Stuttgart 1 (DE)

(72) Erfinder: DRESSLER, Klaus, Weinstr. 45,
D-7121 Löchgau (DE)
Erfinder: PFEFFER, Peter, Am Unteren Haldenrain 7,
D-7128 Lauffen (DE)
Erfinder: SCHWARZ, Albrecht, Hauptstr. 17,
D-7016 Gerlingen (DE)

## Beschreibung

Die Erfindung geht aus von einem Maschinenteil nach der Gattung des Hauptanspruchs. Eine derartige bekannte Messeinrichtung hat zwei zu einer Welle koaxial angeordnete Körper aus elektrisch leitendem, nicht magnetischem Werkstoff, von welchen einer drehfest mit der Welle verbunden ist und der andere diesem gegenüber verdrehbar ist. Weiterhin ist eine zur Welle koaxiale Spule vorgesehen, die von hochfrequentem Wechselstrom durchflossen ist und in unmittelbarer Nähe der beiden Körper angeordnet ist. Diese weisen Ausschnitte auf, deren gemeinsame Überdeckungsfläche mit zunehmendem, zwischen den Körpern auftretendem Verdrehwinkel sich ändert, wobei zur Messung der Impedanzänderung der Spule, die durch in den Körpern induzierte Wirbelströme entsteht, die Relativverdrehung der beiden Körper erfassbar ist. Diese bekannte Einrichtung ist verhältnismässig aufwendig (US-A-29 30 247).

Es ist Aufgabe der Erfindung, ein Maschinenteil nach der Gattung des Anspruchs 1 zu schaffen, das bei relativ einfachem Aufbau und kompakter Bauweise eine genaue Erfassung der Drehmomentdifferenz zweier auf eine Ausgangswelle gemeinsam wirkender Drehmomente ermöglicht. Diese Aufgabe wird durch die im Kennzeichenteil des Anspruchs 1 genannten Massnahmen gelöst. Die Übertragung der Signale vom drehenden auf das feststehende Maschinenteil kann auf verschiedene bekannte Übertragungsmöglichkeiten erfolgen.

Ausführungsbeispiele der Erfindung sind in der Zeichnung dargestellt und in der nachfolgenden Beschreibung näher erläutert. Es zeigen:

Figur 1 ein erstes Ausführungsbeispiel eines auf Torsion beanspruchten Maschinenteils in etwas vereinfachter Darstellung,

Figur 2 ein zweites Ausführungsbeispiel,

Figur 2a eine Ansicht in Pfeilrichtung nach Figur 2.

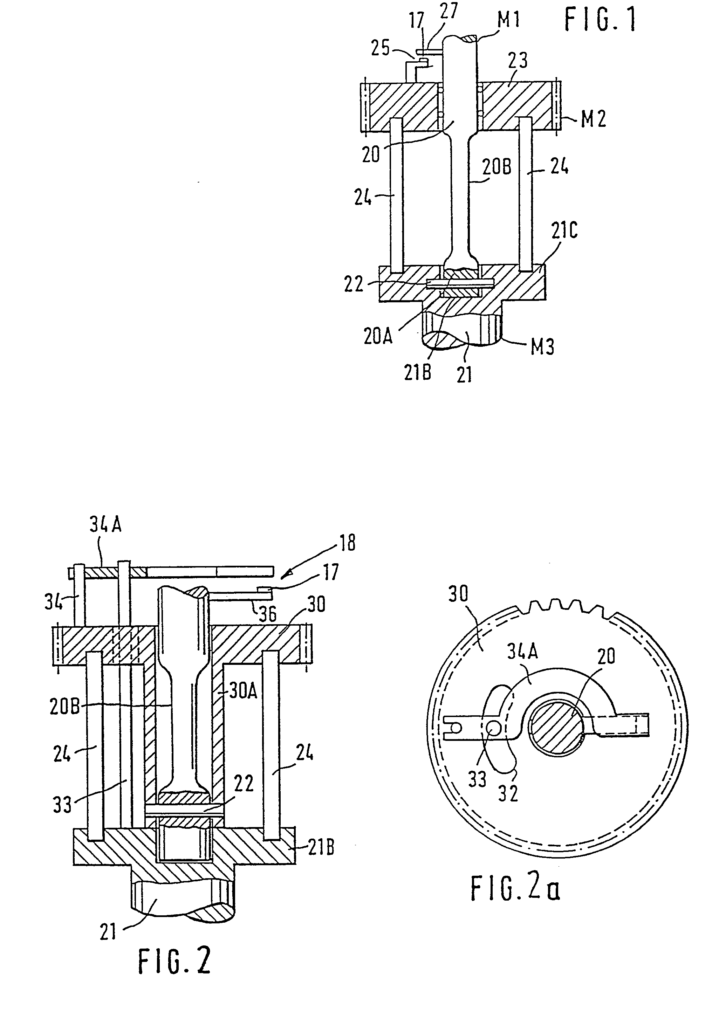

Das Ausführungsbeispiel nach der Figur 1 zeigt ein Maschinenteil im Längsschnitt. Es handelt sich insbesondere um eine elektromechanische Lenkhilfe für ein Fahrzeug. Mit 20 ist die Lenkwelle bezeichnet, an deren oberem Ende ein nicht dargestelltes Lenkrad befestigt ist. Das entgegengesetzte Ende der Lenkwelle 20A ist in einer zylindrischen Ausnehmung 21 B einer Ausgangswelle 21 mit Hilfe eines Sperrstiftes 22 drehfest verbunden; die Ausgangswelle 21 führt zum Lenkgetriebe.

Konzentrisch zur Lenkwelle 20 ist ein auf ihr gelagertes Antriebsrad 23 drehbar angeordnet. Zwischen dem Antriebsrad 23 und dem flanschartigen Oberteil 21 C der Ausgangswelle ist eine drehelastische Verbindung in Form mehrerer Biegestäbe 24 hergestellt. Diese verlaufen parallel zur Lenkwelle 20 und sind im Antriebsrad 23 und im Teil 21 C festgehalten. Die Lenkwelle 20 weist in ihrem mittleren Bereich eine längliche Einschnürung 20B auf. Damit stellt die Lenkwelle 20 das erste Torsionsfederelement dar, während die Biegestäbe 24 das zweite Torsionsfederelement bilden. Das erste und zweite Torsionsfederelement haben unterschiedliche Federkonstanten C1 und C2. Durch die beschriebene Anordnung ist zu erkennen, dass die zwei Torsionsfederelemente parallel angeordnet sind. Das an der Lenkwelle 20 vom Lenkrad eingeleitete erste Drehmoment M1 wird verstärkt durch das über das Antriebsrad 23 zugeführte zweite Drehmoment M2, welches zusammen mit dem Drehmoment M1 zur Ausgangswelle 21 geleitet wird und dort das Summenmoment M3 bildet. Das Antriebsrad 23 wird zweckmässigerweise von einem Elektromotor angetrieben, welcher das am Lenkrad aufgebrachte Moment M1 unterstützt. Durch die eingeleiteten Momente werden die Torsionsfederelemente 20 und 24 verdreht. Der Differenzdrehwinkel als Mass für die Differenz der beiden eingeleiteten Drehmomente wird an einer Vergleichsstelle 25 durch das Sensorelement 17 gegenüber einem Referenzpunkt 27 an der Lenkwelle 20 ermittelt.

Die Ermittlung der Differenzdrehwinkel bedeutet, dass, sobald das Verhältnis der eingeleiteten Drehmomente dem Verhältnis der Torsionsfederkonstanten entspricht, an der Vergleichsstelle 25 die Null-Lage angezeigt wird. Die Drehmomente werden also rein mechanisch ermittelt und verglichen und nur deren Differenz durch geeignete Sensoren ausgewertet.

Aus dem ermittelten Differenzwert kann die Lenkkraftunterstützung durch den Elektromotor bestimmt werden. Ferner kann in einem Fehlerfall ein Abschaltsignal gewonnen werden. Durch den rein mechanischen Vergleich ist die Sicherheit besonders gross, da keine elektrischen Gebersignale verglichen werden müssen. Selbstverständlich lassen sich durch geeignete Anbringung weiterer Sensoren auch die Einzeldrehmomente M1 und M2 und damit auch das Summenmoment M3 ermitteln.

Das Ausführungsbeispiel nach Figur 2 zeigt Ähnlichkeit mit demjenigen nach der Figur 1. Gleiche Teile wie zuvor sind mit den gleichen Ziffern bezeichnet. Der wesentliche Unterschied besteht darin, dass das Antriebsrad — insbesondere wieder Zahnrad — und nunmehr mit 30 bezeichnet, über einen rohrförmigen Fortsatz 30A drehfest über den Sperrstift 22 mit der Lenkwelle 20 verbunden ist. Das Drehmoment M1 wird wieder an der Lenkwelle eingeleitet, das Drehmoment M2 wird vom Antriebsrad 30 über die Biegestäbe 24 der Ausgangswelle 21 zugeführt. Im Antriebsrad 30 ist ein zur Lenkwelle 20 konzentrischer Schlitz 32 ausgebildet, durch den ein Stab 33 dringt, der am flanschartigen Rand 21 B der Ausgangswelle 21 befestigt ist. Weiterhin erstreckt sich vom Zahnrad 30 ein kurzer Stab 34 nach oben, an dem ein gebogener Bügel 34A befestigt ist, der um die Lenkwelle 20 herum geführt ist, und zwar um etwa 180°. An der Lenkwelle 20 ist wiederum ein Referenzpunkt 36 befestigt, welcher das Sensorelement 17 trägt. Das dort gelegene freie Ende des Bügels 34A bildet zusammen mit dem Sensorelement 17 die Vergleichsstelle 18. Die Funktion dieser Einrichtung ist wieder dieselbe wie beim Ausführungsbeispiel nach Figur 2, wobei der Bügel 34A bei Verdrehen des Antriebsrads 30 um den Stab 33 schwenkt.

Durch geeignete Wahl der Federkonstanten C1 und C2 können verschiedene Momentdifferenzen erfasst werden. Die Teilmomente können durch geeignetes Anbringen der Sensorelemente auch einzeln ermittelt und später elektrisch weiterverarbeitet werden.

## Patentansprüche

1. Maschinenteil mit einer Messeinrichtung zur Erfassung des Differenzdrehwinkels oder Differenzdrehmoments, das auf Torsion beansprucht ist und zwei parallel angeordnete und miteinander in Wirkverbindung stehende torsionsfähige Elemente aufweist, auf die jeweils ein gesondertes Drehmoment (M1, M2) eingeleitet wird und wobei an einer Vergleichsstelle (18) mit Hilfe eines Sensors (17) die Differenz der beiden Eingangsdrehwinkel und damit die Differenz der beiden Eingangsdrehmomente erfasst wird, dadurch gekennzeichnet, dass die Torsionsfederelemente eine räumlich voneinader getrennte Bauweise darstellen und koaxial und parallel zueinander angeordnet sind und dass sie unterschiedliche Federkonstanten (C1 und C2) haben.

2. Erfindung nach Anspruch 1, dadurch gekennzeichnet, dass an der Ausgangswelle (21) ein parallel zu ihr verlaufener Messstab (33) angeordnet ist, an dem ein mit dem Antriebsrad (30) in Wirkverbindung stehender Bügel (34A) schwenkbar ist, der mit dem Sensorelement (17) zusammenwirkt.

## Revendications

1. Partie de machine avec un dispositif de mesure pour déterminer l'angle de rotation différentiel ou le couple différentiel, sollicité en torsion et présentant deux éléments susceptibles de torsion, disposés parallèles et placés entre eux dans une liaison fonctionnelle, éléments sur chacun desquels un couple de rotation séparé (M1, M2) est appliqué et la différence des deux angles de rotation d'entrée et ainsi la différence des deux couples de rotation d'entrée étant captée en un point de comparaison (18), à l'aide d'un capteur (17), caractérisée en ce que les éléments élastiques de torsion sont montés de manière spatialement séparée l'un de l'autre et sont disposés coaxialement et séparément l'un de l'autre, et en ce qu'ils présentent des constantes d'élasticité différentes (C1 et C2).

2. Dispositif selon la revendication 1, caractérisé en ce qu'une tige de mesure (33) est disposée sur l'arbre de sortie (21), parallèlement à ce dernier, échelle sur laquelle un étrier (34A), coopérant avec l'élément de capteur (17), est monté pivotant, selon une liaison fonctionnelle, sur la roue d'entraînement (30).

## Claims

1. Machine part having a measuring device for detecting the difference in the angle of rotation or the difference in the torque, which machine part is torsionally stressed and has two torsion elements which are arranged in parallel and are in operative connection with each other and to each of which a separate torque (M1, M2) is applied, the difference between the two input angles of rotation and thus the difference between the two input torques being detected at a comparison point (18) by means of a sensor (17), characterized in that the torsion spring elements represent a design in which they are spatially separated from each other and are arranged coaxially and parallel to each other, and in that they have different spring rates (C1 and C2).

2. Device according to Claim 1, characterized in that there is arranged on the output shaft (21) a measuring bar (33) which runs parallel to the output shaft (21) and on which a strap (34A) is pivotable, which strap (34A) is in operative connection with the driving pinion (30) and interacts with the sensor element (17).

FIG.1

FIG.2

FIG.2a